# EUROPÄISCHE PATENTSCHRIFT

(11) **EP 0 709 807 B1**
(45) Veröffentlichungstag und Bekanntmachung des Hinweises auf die Patenterteilung: **05.01.2000**
(21) Anmeldenummer: 95250251.6
(22) Anmeldetag: 13.10.1995
(51) Int. Cl.: G06T 7/20

(54) **Verfahren zur Ermittlung von Lösungen für das Assoziationsproblem bei der Bahnverfolgung mehrerer sich bewegender Objekte**
Method for finding solutions for the association problem in multiple-moving-target tracking
Méthode pour trouver des solutions du problème d'association pour la poursuite de plusieurs cibles mobiles

(30) Priorität: 28.10.1994 DE 4439742
(43) Veröffentlichungstag der Anmeldung: 01.05.1996
(73) Patentinhaber: DaimlerChrysler AG, 70567 Stuttgart (DE)
(72) Erfinder: Schütte, Andreas, Dr. Dipl.-Ing., D-10247 Berlin (DE)

(56) Entgegenhaltungen:
- WO-A-89/09977
- SIGNAL AND DATA PROCESSING OF SMALL TARGETS 1991, ORLANDO, FL, USA, 1-3 APRIL 1991, Bd. 1481, ISSN 0277-786X, PROCEEDINGS OF THE SPIE - THE INTERNATIONAL SOCIETY FOR OPTICAL ENGINEERING, 1991, USA, Seiten 371-383, FRIDLING B E ET AL 'Performance evaluation methods for multiple target tracking algorithms'
- EUROPEAN JOURNAL OF OPERATIONAL RESEARCH, 11 MARCH 1992, NETHERLANDS, Bd. 57, Nr. 2, ISSN 0377-2217, Seiten 253-270, ROSENBLATT M J ET AL 'A distance assignment approach to the facility layout problem'
- IEEE INTERNATIONAL CONFERENCE ON SYSTEMS ENGINEERING (CAT. NO.92CH3179-9), KOBE, JAPAN, 17-19 SEPT. 1992, ISBN 0-7803-0734-8, 1992, NEW YORK, NY, USA, IEEE, USA, Seiten 527-530, DEB S ET AL 'An S-dimensional assignment algorithm for track initiation'
- IEEE TRANSACTIONS ON SYSTEMS, MAN AND CYBERNETICS, SEPT.-OCT. 1991, USA, Bd. 21, Nr. 5, ISSN 0018-9472, Seiten 1125-1139, TING P ET AL 'Multitarget motion analysis in a DSN'
- PROCEEDINGS OF THE 36TH MIDWEST SYMPOSIUM ON CIRCUITS AND SYSTEMS (CAT. NO.93CH3381-1), PROCEEDINGS OF 36TH MIDWEST SYMPOSIUM ON CIRCUITS AND SYSTEMS, DETROIT, MI, USA, 16-18 AUG. 1993, ISBN 0-7803-1760-2, 1993, NEW YORK, NY, USA, IEEE, USA, Seiten 492-495 vol.1, BRUDER S ET AL 'A NN type multi-sensor tracking and identification algorithm'

## Beschreibung

Die Erfindung bezieht sich auf ein Verfahren gemäß dem Oberbegriff des Anspruchs 1. Ein solches Verfahren ist durch das Buch von Samuel S. Blackman "Multiple-Target Tracking with Radar Applications", Artech House, Norwood, MA, 1986, Seiten 92 bis 101 bekannt.

Das Assoziationsproblem bei der Bahnverfolgung mehrerer sich bewegender Objekte ist ein Zuordnungs- (oder auch Assignment-)Problem. Es stellt sich wie folgt dar:
N Elementen Tᵢ ( i = 1(1)N) aus einer Menge 1 sollen M Elemente Oⱼ (j = 1(1)M) aus einer Menge 2 zugeordnet werden, wobei jedem Element der Menge mit kleinerer Elementeanzahl genau ein Element der anderen Menge zugeordnet werden soll. Jedes Element der Menge mit der größeren Elementeanzahl darf maximal einem Element der anderen Menge zugeordnet werden. Die Lösung wird in Form einer Zuordnungsmatrix beschrieben. Eine Paarung von Tᵢ mit Oⱼ ist mit den Kosten dᵢⱼ verbunden. Die Paarung von Tᵢ und Oⱼ wird in der Zuordnungsmatrix durch eine Eins (im folgenden als Größe 1) bezeichnet an der Position (i, j) dargestellt, wobei i als Zeilennummer und j als Spaltennummer dienen. In der Zuordnungsmatrix muß für ein gültiges, d.h. widerspruchsfreies und vollständiges Assignment für N ≤ M genau N und für M ≤ N genau M mal die Größe 1 stehen, wobei in jeder Spalte und Zeile der Zuordnungsmatrix maximal einmal die Größe 1 stehen darf. Gesucht ist nun eine Zuordnungsmatrix, die diejenigen Paarungen enthält, durch die die mit diesen Paarungen verbundenen Gesamtkosten (Summe der entsprechenden dᵢⱼ) minimal sind. Alle gewählten Paarungen stellen die Zuordnung (Assignment) dar. Von einem unvollständigen Assignment spricht man, wenn im Assignment nur L(L < min(N, M)) Paarungen auftreten dürfen. Beim Multiple-Target-Tracking (Bahnverfolgung einer Mehrzahl sich bewegender Objekte) als eine technische Anwendung in der Suche einer Lösung des Assoziationsproblems kann das der Fall sein, wenn die Detektionswahrscheinlichkeit der Objekte signifikant kleiner als Eins ist.

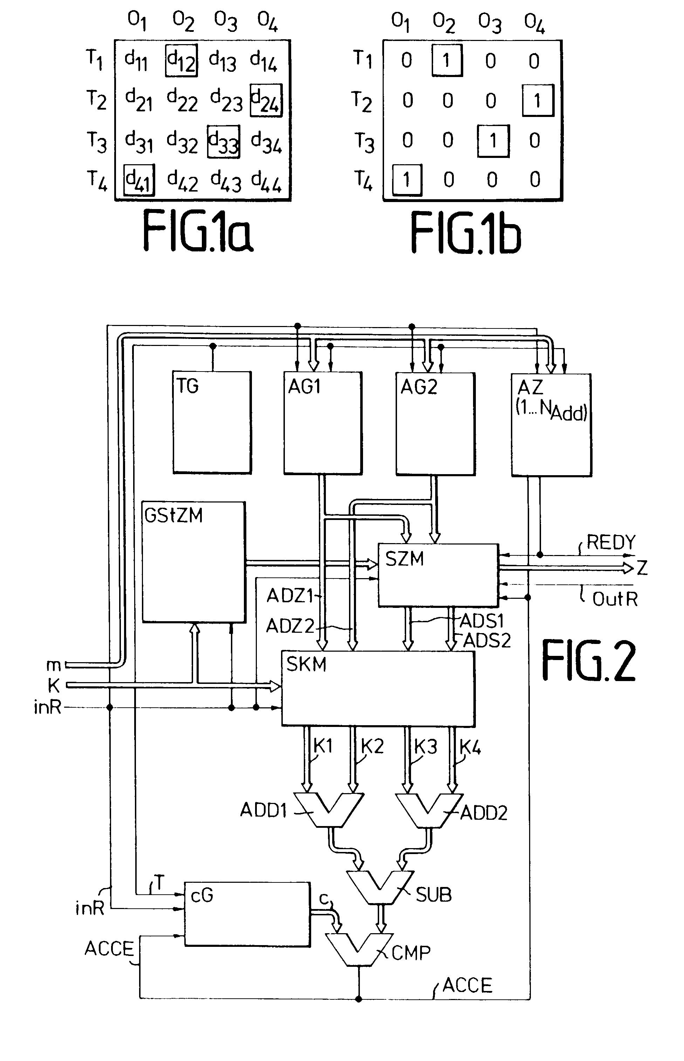

Für ein 4 x 4-Problem ( N = M = 4) einer bipartiten Zuordnung (Matching) ist in Fig. 1 der Sachverhalt illustriert. Vorgegeben ist a) eine Kostenmatrix mit den Kosten d₁₁ bis d₄₄ in Zuordnung der Elemente T₁ bis T₄ zu den Elementen O₁ bis O₄.

Bei der Bahnverfolgung mehrerer sich bewegender Objekte (Multiple-Target-Tracking) zum Beispiel ist eine solche Kostenmatrix als sogenannte Abstandsmatrix aufzufassen, wobei unter den Kosten die quadrierten (Fehler-)Abstände zwischen der tatsächlichen Lage (Meßwert) eines sich bewegenden Objekts und einem Prädiktionswert, also einem vorausbestimmten Wert der Bahnkurve des Objekts zu verstehen sind; das heißt, die Kostenmatrix als Abstandsmatrix gibt in der hier vorliegenden technischen Anwendung des Assoziationsproblems einen Wert an, wie weit das einzelne Objekt vom vorausberechneten Wert abweicht.

Gesucht wird eine als Kombination optimale Zuordnungsmatrix, wobei wie in Fig. 1b gezeigt, jeweils minimale Kosten dᵢⱼ der Abstandsmatrix in der Einzelzuordnung eine 1 in der Zuordnungsmatrix zur Folge haben. Die Summe der durch die Zuordnungsmatrix selektierten quadrierten Abstände (Kosten) dᵢⱼ soll minimal werden.

Beim Multiple-Target-Tracking sich bewegender Objekte (zum Beispiel bei der Luftraumüberwachung bzw. Kollisionsprävention durch optimale Vorausbestimmung der Bahnkurven der sich bewegenden Objekte) ist das Assoziationsproblem häufig sowohl in ausreichender Qualität als auch in sehr kurzer Zeit, das heißt unter Echtzeitanforderungen zu lösen. Bei hohen Echtzeitanforderungen ist die optimale (exakte) Lösung des Assoziationsproblems zum Beispiel mit dem in seiner Anwendung in der vorgenannten Literaturstelle beschriebenen Munkresalgorithmus zu aufwendig, so daß in diesen Fällen ein technisches Lösungsverfahren angestrebt wird, das einen möglichst guten Kompromiß zwischen der Güte der ermittelten Lösungen und dem dafür erforderlichen Zeitaufwand darstellt.

Für die Lösung des Assoziationsproblems beim Multiple-Target-Tracking gibt es eine Reihe von optimalen und suboptimalen Verfahren. Folgend sind die wichtigsten Verfahren aufgezählt:
- Anwendung des Munkresalgorithmus auf die Abstandsmatrix (s. Blackman a.a.O.),
- Anwendung des Nächste-Nachbarn-Verfahrens (Greedyalgorithmus) auf die Abstandsmatrix (s. Blackman, a.a.O., "Suboptimal Solution Two")
- Anwendung des Vereinfachten Nächste-Nachbarn-Verfahrens auf die Abstandsmatrix (s. Blackman a.a.O., "Suboptimal Solution One")
- Berechnung der "Cheap"-JPDA-Matrix als neue Kostenmatrix aus der Abstandsmatrix und Anwendung des zuvor genannten Vereinfachten Nächste-Nachbarn-Verfahrens auf diese "Cheap"-JPDA-Matrix (s. Bar-Shalom "Multi Target-Multisensor Tracking", Artech House, Norwood, MA. 1990, Seiten 1 bis 23)
- Berechnung einer verbesserten suboptimalen JPDA-Matrix als neue Kostenmatrix aus der Abstandsmatrix und Anwendung des Vereinfachten Nächste-Nachbarn-Verfahrens auf diese "Cheap"-JPDA-Matrix (s. Roecker "Suboptimal Joint Probabilistic Data Association" in IEEE Transactions on Aerospace and Electronic Systems Vol. 29, No. 2 April 1993, Seiten 510 bis 516
- Anwendung von rückgekoppelten neuronalen Netzwerken, wie zum Beispiel das Hopfieldnetz (s. Sengupta und Iltis "Neural Solution to the Multitarget Tracking Data Association Problem" in IEEE Transactions on Aerospace and Electronic Systems Vol. AES-25, No. 1 January 1989, Seiten 96 bis 108 oder auch anderer Netzwerkstrukturen (s. Eberhardt et al "Competitive Neural Architecture for Hardware Solution to the Assignment Problem" in "Neural Networks", Vol. 4, 1991, Seiten 431 bis 442), wo ein dynamisches System so strukturiert, parametrisiert und initialisiert wird, daß die Ruhelage, die mit hoher Wahrscheinlichkeit Endpunkt der Eigendynamik des Systems ist, die Lösung des Assoziationsproblems repräsentiert.
- Anwendung von zellulären stochastischen Netzwerken (s. zum Beispiel EP 0 362 874 A3), wo ein dem Simulated Annealing (s. Kirkpatrick et al "Optimization by Simulated Annealing" in "SCIENCE", Volume 220, Nummer 4598, 1983, Seiten 5 bis 14) ähnlicher dynamischer Prozeß realisiert wird.

Genannte oder ähnliche Verfahren, das Assoziationsproblem im Rahmen der Multiple-Target-Tracking-Problematik zu lösen, haben entweder den Nachteil, daß sie zu zeitaufwendig sind und daher den Echtzeitanforderungen nicht gerecht werden, oder aber die bereitgestellten Lösungen nicht die erforderliche Güte haben. Die unmittelbare Folge ist dann eine unzureichende Bahnverfolgung. Dieses gilt umso mehr, je schwieriger das Assoziationsproblem wird. Beim Multiple-Target-Tracking-Problem ist das der Fall, wenn immer mehr Objekte unter schwierigeren Bedingungen (reduzierte Detektionswahrscheinlichkeit der Objekte, hohe Objektdichte und erhöhte Falschalarmrate) gleichzeitig zu verfolgen sind. So ist zum Beispiel das Munkres-Verfahren exakt - löst also das Problem bestmöglich. Es ist aber für größere Probleme zu aufwendig. Das Vereinfachte Nächste-Nachbarn-Verfahren ist dagegen ein sehr schnelles Verfahren, dessen Lösungen aber oft nicht von ausreichender Güte sind.

Hinsichtlich der Problemlösungen mit Neuronalen Netzen ist zu bemerken, daß derartige Verfahren nur dann aussichtsreich den Echtzeitanforderungen gerecht werden können, wenn diese Strukturen in analoger Hardware realisiert werden. Derartige analoge Schaltungen sind heute jedoch nicht kommerziell verfügbar. Zudem ist festzustellen, daß das dynamische Verhalten derartiger Netze hinsichtlich der Stabilität noch nicht befriedigen kann. Bei komplizierteren Assoziationskonstellationen endet der Relaxationsvorgang oft nicht in einer Ruhelage, deren Zustand die Problemlösung darstellen würde, sondern in einem Grenzzyklus. In diesen Fällen kann eine Lösung nicht angegeben werden. Andererseits ist es bei komplizierteren Konstellationen nicht möglich, aus dem Zustand der Ruhelage des Netzwerks ohne weiteres die Zuordnungsmatrix "auszulesen". In diesen Situationen wird wieder die Anwendung zum Beispiel des Vereinfachten Nächste-Nachbarn-Verfahrens notwendig. Man findet so zwar Lösungen hoher Güte, muß aber den numerischen Aufwand, zum Beispiel für das Vereinfachte Nächste-Nachbarn-Verfahren zusätzlich erbringen.

Für die Anwendung der weiter oben erwähnten zellulären stochastischen Netzwerke gilt ähnliches wie für die Anwendung Neuronaler Netze. Erstens wird eine Hardwareimplementierung in analoger Schaltungstechnik erforderlich, um Echtzeitanforderungen zu erfüllen, was für größere Probleme nur in VLSI-Technik möglich ist und gegenwärtig nicht zur Verfügung steht. Zudem ist der Hardwareaufwand sehr groß, wenn berücksichtigt wird, daß von allen NxM "processing cells" pro Zyklus immer genau nur eine aktiv ist. Eine Parallelität des Arbeitens der "processing cells" im "cellular network" liegt beim aus der EP-A-0 362 874 bekannten Verfahren, wie sonst bei Netzwerken üblich, nicht vor. Weiterhin ist die Behandlung von Assoziationsproblemen mit N ≠ M bzw. unvollständigem Assignment nicht ohne zusätzlichen Vorbereitungsaufwand möglich.

Der Erfindung liegt die Aufgabe zugrunde, das eingangs angegebene Verfahren derart auszugestalten, daß es mit den derzeit vorhandenen Hardwaremöglichkeiten den bei der Anwendung sich stellenden Echtzeitanforderungen genügen kann und dabei trotzdem die dabei gefundene Lösung eine hohe Güte aufweist. Auch sollen mit dem Verfahren auftretende nichtsymmetrische Assoziationsprobleme und Probleme mit nicht vollständigem Assignment (Zuordnung) lösbar sein.

Diese Aufgabe wird gemäß der Erfindung durch die im Anspruch 1 gekennzeichneten Merkmale gelöst.

In der Softwareimplementierung auf einem Digitalrechner stellt das Verfahren nach der Erfindung gegenüber den oben angegebenen bekannten Verfahren das zweitschnellste Verfahren (nach dem Vereinfachten Nächste-Nachbarn-Verfahren) zur Lösung des Assoziationsproblems dar. Ähnliches gilt sicherlich auch für die Realisierung in digitaler (Spezialprozessor) oder analoger (spezielle analoge Schaltung, zum Beispiel CMOS-VLSI) Hardware.

Da das Verfahren nach der Erfindung ein Suchverfahren ist, ist es zweckmäßig, die Suche von einem günstigen Ausgangspunkt, d.h. mit einer günstigen Zuordnungsmatrix zu beginnen.Als Verfahren zur Berechnung einer günstigen Anfangskonstellation für die Zuordnungsmatrix (Start-Zuordnungsmatrix) ist die Verwendung des Vereinfachten Nächste-Nachbarn-Verfahrens besonders geeignet. Hinsichtlich der Assoziationsgüte zeigen einige Simulationsrechnungen, daß es bei komplexeren Assoziationsproblemen (Problemgröße: ca. 30 x 30 und manövrierende Objekte) allen oben genannten Verfahren überlegen ist (im allgemeinen sehr gute Lösungen, keine Stabilitätsprobleme).

So bestehen die Vorteile des Verfahrens nach der Erfindung in einer drastischen Verbesserung der Assoziationsgüte bei zugleich vergleichsweise sehr kleinem numerischen / hardwaremäßigen Aufwand, was insbesondere eine erhebliche Verbesserung der Lösung des Assoziationsproblems ergibt, wenn hohe Echtzeitanforderungen zu berücksichtigen sind.

Die wesentlichen Ursachen für die ausgesprochene Effizienz- und Einsatzfähigkeit des Verfahrens sind:
1. Es kann das Ergebnis von sehr schnellen, existierenden Verfahren genutzt werden, um eine gute Start-Zuordnungsmatrix zu ermitteln.
2. Durch das Verfahren zur Generierung neuer Zuordnungsmatrizen werden nur solche erzeugt, die a priori ein gültiges Assignment repräsentieren.
3. Durch Wahl eines geeigneten Gütevergleichswerts (≡ 0) werden nur Lösungen neu gefunden, die besser als die Start-Zuordnungsmatrix sind.
4. Durch Nutzung unterschiedlicher, mehr oder weniger randomisierter oder auch deterministischer Adreßgenerierungsmöglichkeiten für die Zeilenwahl zum Vertauschen der mit der Größe 1 belegten Stellen kann die Adreßgenerierung an das Problem angepaßt werden. Wenn, wie zum Beispiel durch das Vereinfachte Nächste-Nachbarn-Verfahren, schon relativ gute Start-Zuordnungsmatrizen bereitgestellt werden, sind besonders deterministische Adreßgenerierungsverfahren effizient.
5. Das Verfahren ermöglicht eine extrem einfache Berechnung der Gütedifferenz (Abstandsdifferenz) zwischen Zuordnungsmatrix, die momentaner Ausgangspunkt der Suche ist, und der neu generierten Zuordnungsmatrix. Die automatische Suche nach einer besseren Lösung beinhaltet pro Suchschritt ja vorteilhafterweise lediglich das Vertauschen zweier Einsen in der Zuordnungsmatrix sowie zwei Addier-, einen Subtrahier- und einen Vergleichsvorgang, wodurch wenig Rechenzeit anfällt.
6. Die Behandlung von unsymmetrischen Problemen (N ≠ M) und Problemen mit unvollständigem Assignment ist direkt möglich (die Anzahl der Einsen in der Start-Zuordnungsmatrix ändert sich während der Bearbeitung durch das beschriebene Suchverfahren nicht).

Das Verfahren nach der Erfindung soll beispielhaft anhand eines in der Fig. 2 der Zeichnung dargestellten Blockschaltbildes für eine hardwaremäßig Implementierung nachfolgend erläutert werden.

In Fig. 2 sind ein Taktgenerator TG, zwei Adreßgeneratoren AG1, AG2, ein Adreßzähler AZ, ein Generator GStZM für die erstmalige Vorgabe einer Start-Zuordnungsmatrix (Anfangskonstellation der Zuordnungsmatrix), ein Speicher SZM für die jeweils gültige Zuordnungsmatrix, ein Speicher SKM für die vorgegebene Abstandsmatrix, eine Rechenschaltung aus zwei Addiergliedern ADD1, ADD2 und einem nachgeschalteten Subtrahierglied SUB, einem Komparator CMP und eine Schaltung cG zur Berechnung eines Gütevergleichswerts (Schwellwert) gezeigt. Diese Elemente arbeiten bei dem Verfahren nach der Erfindung wie folgt miteinander:
Mit dem Aktivwerden einer Eingabeaufforderung InR wird eine vorbestimmte Abstandsmatrix K in den Speicher SKM für die Abstandsmatrix übernommen und der Adreßzähler AZ wird zurückgesetzt. Von den Adreßgeneratoren AG1, AG2 wird der aktuelle Wert der Dimension m übernommen, der dem größeren Wert der Zeilen- oder Spaltenanzahl der Abstandsmatrix K entspricht. In Abhängigkeit von dieser Problemgröße m wird im Adreßzähler AZ die maximal mögliche Adreßanzahl N_{Add}, berechnet. (Wird bei der nachfolgend noch zu beschreibenden Suche diese Adreßanzahl N_{Add} erreicht, wird durch ein Signal REDY angezeigt, daß ein Weitersuchen keine bessere Lösung liefern kann, weil sämtliche Suchmöglichkeiten erschöpft sind).

Gleichzeitig beginnt der Generator der Start-Zuordnungsmatrix GStZM eine Zuordnungsmatrix zu berechnen, die Ausgangspunkt der Suche sein soll. Im einfachsten Fall kann diese eine beliebige gültige Zuordnungsmatrix sein, die nicht von dem Inhalt der aktuellen Abstandsmatrix abhängt. Es besteht aber auch die Möglichkeit, zum Beispiel mit dem Vereinfachten Nächste-Nachbarn-Verfahren eine bessere Start-Zuordnungsmatrix zu ermitteln. Mit dem anschließenden Inaktivwerden der Eingabeaufforderung InR wird die ermittelte Start-Zuordnungsmatrix in den Speicher SZM übernommen und der eigentliche Suchvorgang beginnt.

Die Adreßgeneratoren AG1 und AG2 liefern bei jedem durch den Taktgenerator TG vorgegebenen neuen Takt T zwei neue Adressen ADZ1 (T) und ADZ2 (T) zweier Zeilen der Zuordnungsmatrix, die wenn sie vertauscht würden, eine neue Zuordnungsmatrix darstellen (Variationsoperator des Suchverfahrens). Der Speicher SZM der Zuordnungsmatrix gibt daraufhin die Adressen ADS1 (T) und ADS2 (T) aus. Diese geben an, in welchen Spalten die Größe 1 in den beiden Zeilen der Zuordnungsmatrix stehen (die Rolle von Zeile und Spalte ist aber generell entsprechend austauschbar).

Liegen die vier Adressen am Speicher SKM der Abstandsmatrix an, so werden die vier Kostengrößen an den adressierten Stellen, nämlich K1 = K (ADZ1, ADS1), , K2 = K (ADZ2, ADS2), K3 = K (ADZ1, ADS2) und K4 = K (ASZ2, ADS1) an die nachfolgende Rechenschaltung ausgegeben. Die Rechenschaltung berechnet den Wert Δ = ((K1+K2) - (K3+K4)) . Dieser Wert stellt die Gütedifferenz zwischen der alten Zuordnungsmatrix und der neugenerierten Zuordnungsmatrix dar.

Zu bemerken ist, daß innerhalb dieses Verfahrens, im Unterschied zu vielen anderen Verfahren, zur Berechnung der Gütedifferenz nicht die vollständige Berechnung der Güte der beiden zu vergleichenden Zuordnungsmatrizen notwendig ist. Aufgrund des hier angewendeten Variationsoperators ist es beim Verfahren nach der Erfindung möglich, lediglich mit der Berechnung des Ausdrucks ((K1 + K2) - (K3 + K4)) (zwei Additionen und eine Subtraktion!) auszukommen. Die ermittelte Gütedifferenz wird nun mit einem von der Schaltung cG vorgegebenen Schwellwert c als Gütevergleichswert im Komparator CMP verglichen. Wird die Bedingung ((K1 + K2) - (K3 + K4)) < c erfüllt, so wird vom Komparator CMP ein Signal ACCE ausgegeben. Im Speicher SZM werden die Werte der beiden durch ADZ1 (T) und ADZ2 (T) adressierten Zeilen vertauscht und der Adreßzähler AZ wird zurückgesetzt. In diesem Fall ist ab dem folgenden Takt (T + 1) die neue, durch das zweizeilenweise (oder zweispaltenweise) Vertauschen der Größe 1 gewonnene Zuordnungsmatrix der Ausgangspunkt der weiteren Suche, und der Adreßzähler beginnt von neuem die auszugebenden Adressen zu zählen. Für den Gütevergleichswert c(T) ≡ 0 wird beim Verfahrensablauf immer genau dann eine neue Zuordnungsmatrix im Speicher SZM festgehalten, die eine bessere Lösung des Assoziationsproblems darstellt.

Die durch die Adreßgeneratoren AG1 und AG2 vorgegebenen Adressen können durch Zufallsgeneratoren erzeugt oder auch a priori festgelegt in zufälliger oder festgelegter Reihenfolge ausgegeben werden. Mit jedem neuen Takt T wird ein neues Adreßpaar ausgegeben. In Abhängigkeit von m (m = max (Zeilenzahl (K), Spaltenzahl (K))) werden die Adressen im relevanten Bereich (1 ... m) erzeugt. Für bestimmte deterministische Adreßsequenzen und die Wahl c ≡ 0 ist es möglich, in Abhängigkeit von der Dimension m anzugeben, nach wieviel Adreßpaaren nach dem letzten Aktivwerden des Signals ACCE die Weitersuche eingestellt werden kann. Zu diesem Zweck wurde anfangs die Adreßanzahl N_{Add} berechnet. Zum Abzählen dieser Adressen (Takte) dient der Adreßzähler AZ, der durch das Aktivsetzen des REDY-Signals das Ende des Suchvorgangs nach außen anzeigt. Durch eine Ausgabeanforderung OutR wird die gefundene bessere Zuordnungsmatrix Z aus dem Speicher SZM ausgelesen.

Die Effektivität der Suche kann unter Umständen erheblich verbessert werden, wenn der Ausgangspunkt der Suche bereits eine relativ gute Lösung des Assoziationsproblems ist. Es ist den tatsächlichen Anforderungen anzupassen, welches Verfahren zur Ermittlung der Start-Zuordnungsmatrix herangezogen wird.

Der Speicher SZM der Zuordnungsmatrix kann so ausgeführt sein, daß die gesamte Zuordnungsmatrix als Binärmatrix abgespeichert wird. Eine sehr effiziente Möglichkeit ist aber auch die Abspeicherung eines "Einsenpositionsvektors". In ihm ist für jede Zeile der Zuordnungsmatrix die Spaltennummer abgelegt, in der sich die Größe 1 befindet. Ist in einer Zeile der Zuordnungsmatrix keine 1, ist für diese Zeile im Einsenpositionsvektor ein "Nil" eingetragen.

Eine einfache und naheliegende Wahl für den Gütevergleichswert ist c (T) ≡ 0. In diesem Fall ist c konstant und unabhängig von den Signalen T, InR und ACCE. Für das Suchverfahren im Sinne eines stochastischen Suchverfahrens kann es jedoch von Vorteil sein, mit einem von der Zeit t abhängigen c (T) = c (t) ≥ 0 zu arbeiten. Dazu wird der Schwellwert c (T) von einem bestimmten positiven Anfangswert beginnend schrittweise auf Null reduziert. Bei Benutzung dieser Verfahrensvariante verbessern sich unter Umständen die Ergebnisse, wobei sich jedoch gleichzeitig im allgemeinen der Suchvorgang verlängert.

Das Verfahren zur Ermittlung von Lösungen für das Assoziationsproblem, mit dem die Zuordnung von Beobachtungen zu Objekten beim Multiple-Target-Tracking durchgeführt wird, ist also dadurch gekennzeichnet, daß von einer irgendwie gearteten, aber im obigen Sinne gültigen Zuordnungsmatrix (das heißt in jeder Spalte oder Zeile der Zuordnungsmatrix maximal eine Größe 1, insgesamt lediglich die Anzahl der Größe 1, die der Anzahl der zu vergleichenden Elemente der kleineren Menge entspricht) ausgehend, durch mehr oder weniger systematisches oder auch randomisiertes Suchen nach besseren Lösungen gesucht wird. Die Generierung neuer Zuordnungsmatrizen erfolgt inhaltlich durch das Vertauschen von zwei beliebigen Reihen (entweder von zwei Zeilen oder von zwei Spalten) in der aktuellen Zuordnungsmatrix. Die Vertauschung im Speicher der Zuordnungsmatrix erfolgt aber tatsächlich nur dann, wenn das Signal ACCE aktiv wird, also der vorgegebene Schwellwert c bei der Suche unterschritten wird. Die Festlegung, welche Reihen der Zuordnungsmatrix zu vertauschen sind, erfolgt allein durch die Adreßgeneratoren AG1, AG2.

Auch nichtsymmetrische Assoziationsprobleme und Probleme mit nicht vollständigem Assignment sind durch das vorgestellte Verfahren lösbar. Ist die Anzahl von Objekten oder Meßwerten ungleich, liegt eine rechteckige Abstandsmatrix vor und die Lösung ist eine Zuordnungsmatrix gleicher Abmessungen. In der Zuordnungsmatrix steht jetzt nicht mehr in jeder Zeile bzw. Spalte eine Eins. Auch diese Fälle werden ohne Einschränkung durch das vorgestellte Verfahren einer Lösung zugeführt, solange in jeder Spalte der Start-Zuordnungsmatrix genau eine Größe 1 steht. Ist dies nicht der Fall, ist dieser Zustand durch Transponieren der Abstands- und der Start-Zuordnungsmatrix herzustellen. Durch die mögliche Überführung des nichtsymmetrischen in ein symmetrisches Problem läßt sich das Verfahren ohne Modifikation unmittelbar verwenden. Aber auch geringfügige Modifikationen des Verfahrens machen die unmittelbare Lösung nichtsymmetrischer Assoziationsprobleme möglich. Ähnlich verhält es sich mit Assoziationsproblemen, bei denen zum Beispiel infolge zu kleiner Detektionswahrscheinlichkeit der zum Beispiel in ihrer Bahn zu verfolgenden Objekte kein vollständiges Assignment (Zuordnung) erfolgen soll. Hier besteht die Möglichkeit, durch verändertes Berechnen der Start-Zuordnungsmatrix dem Rechnung zu tragen. Während der Suche wird die Anzahl der Größe 1 in der Zuordnungsmatrix nicht verändert.

Die aktuelle Abstandsmatrix beeinflußt die Suche durch den Lösungsraum nur insoweit, daß einerseits möglicherweise die Start-Zuordnungsmatrix von ihr abhängt und andererseits neu getestete Zuordnungsmatrizen dann zum Ausgangspunkt der Weitersuche gemacht werden, wenn der Komparator CMP das Erfüllen des Kriteriums ((K1 + K2) - (K3 + K4)) < c anzeigt.

Das Verfahren kann jederzeit, zum Beispiel aufgrund sich ändernder Echtzeitanforderungen abgebrochen werden, und das unter Umständen vorläufige Endergebnis kann auf Anforderung (OutR) jederzeit ausgegeben werden. Durch das Signal REDY wird auf jeden Fall angezeigt, wann die Suche beendet ist, sofern ein deterministisches Adreßgenerierungsverfahren benutzt wird und ein Gütevergleichswert c ≡ 0 gewählt wurde.

Wenn Verfahrenskomponenten in randomisierter Ausprägung verwendet werden - zum Beispiel bei zufälliger Generierung der Start-Zuordnungsmaatrix - führen unterschiedliche Suchen im allgemeinen zu unterschiedlichen Ergebnissen. Je häufiger jedoch Suchen durchgeführt werden, umso größer ist die Wahrscheinlichkeit, daß gute Lösungen gefunden werden. Das beschriebene Verfahren ist völlig unabhängig voneinander beliebig oft seriell und / oder parallel durchführbar. Das beste Ergebnis der einzelnen Suchen ist die gefundene Lösung.

Das Verfahren läßt jede Form der Anwendung sowohl in der digitalorientierten Hardwareimplementierung (siehe Fig. 2, zum Beispiel Spezialprozessor), in der entsprechenden Implementierung in analoger Schaltungstechnik (oder auch Analogrechner) als auch in der Softwareimplementierung auf einem Digitalrechner zu.

## Patentansprüche

1. Verfahren zur automatischen kombinatorischen Optimierung von Zuordnungen einzelner, vorausberechneter Lagen von Objekten aus einer ersten Menge zu einzelnen tatsächlich beobachteten Lagen von Objekten einer zweiten Menge bei der Bahnverfolgung mehrerer sich bewegender Objekte, wobei
- jeder Objektlage der Menge mit der kleineren Anzahl an Objektlagen genau eine Objektlage der anderen Menge und jeder Objektlage der Menge mit der größeren Anzahl von Objektlagen maximal eine Objektlage der anderen Menge zugeordnet wird,
- jede einzelne Paarung eine in einer Abstandsmatrix darstellbare vorgegebene Abstandsgröße ergibt, die dem quadrierten Abstand der tatsächlichen beobachteten Lage eines Objekts und einer vorausberechneten Lage entspricht, und
- die paarweisen Zuordnungen in einer aus den Größen 1 und 0 gebildeten Zuordnungsmatrix erfaßt werden, in der als Randbedingungen insgesamt von der Größe 1 nur die Anzahl der Objektlagen der kleineren Menge auftritt und in jeder Spalte und Zeile jeweils nur maximal einmal die Größe 1 steht,
**dadurch gekennzeichnet,**
- daß als Anfangskonstellation eine beliebige, die Randbedingungen erfüllende Matrix als zunächst gültige Start-Zuordnungsmatrix generiert wird,
- daß zwei Zeilen aus der Start-Zuordnungsmatrix ausgewählt werden und in diesen Zeilen die Größen 1 in jeweils diejenige Spalten gesetzt werden, die in der anderen Zeile zuvor durch eine 1 belegt waren, daß die Summe derjenigen beiden Abstandsgrößen gebildet wird, die in der Abstandsmatrix in den ausgewählten Zeilen an den jeweiligen, durch die Größe 1 bestimmten Stellen der Start-Zuordnungsmatrix stehen,
- daß ebenso die Summe derjenigen beiden Abstandsgrößen gebildet wird, die in der Abstandsmatrix in den ausgewählten Zeilen den jeweiligen, durch die Größe 1 bestimmten Stellen in der neu gebildeten Zuordnungsmatrix entsprechen.
- daß die Differenz der beiden gebildeten Summen der Abstandsgrößen als Gütedifferenz gebildet wird und mit einem vorgegebenen Gütevergleichswert (Schwellwert) verglichen wird,
- daß die neu gebildete Zuordnungsmatrix als nunmehr gültige Zuordnungsmatrix verwendet wird, sofern die Gütedifferenz den Gütevergleichswert unterschreitet, anderenfalls aber die Start-Zuordnungsmatrix gültig bleibt,
- daß dann in der jetzt gültigen Zuordnungsmatrix erneut die Größen 1 in zwei Zeilen spaltenmäßig vertauscht werden und erneut je zu vergleichender Zuordnungsmatrix die beiden Summen der Abstandsgrößen gebildet werden, die in den ausgewählten Zeilen der jeweiligen Zuordnungsmatrix mit der Größe 1 belegt sind,
- daß darauf wiederum die Gütedifferenz zwischen den beiden Summen mit dem Gütevergleichswert verglichen wird und die durch das zweizeilenweise Vertauschen der Größe 1 neu gebildete Zuordnungsmatrix dann als nunmehr gültige Zuordnungsmatrix für weitere Vergleiche von Zuordnungsmatrizen verwendet wird, sofern die Gütedifferenz den Gütevergleichswert unterschreitet, anderenfalls die bisher gültige Zuordnungsmatrix als Ausgangskonstellation für weitere Gütevergleiche dient,
- und daß das Verfahren in dieser Weise fortgesetzt wird, bis eine vorgegebene Zeit abgelaufen ist oder sämtliche Tauschmöglichkeiten zweier Zeilen in der Zuordnungsmatrix erschöpft sind oder nach einer bestimmten Anzahl von Vergleichen keine bessere Zuordnungsmatrix gefunden wird.

2. Verfahren nach Anspruch 1,
**dadurch gekennzeichnet,**
daß die Start-Zuordnungsmatrix durch ein Optimierungsverfahren vorbestimmt wird.

3. Verfahren nach Anspruch 2,
**dadurch gekennzeichnet,**
daß als Optimierungsverfahren das Vereinfachte Nächste-Nachbarn-Verfahren angewendet wird.

4. Verfahren nach einem der Ansprüche 1 bis 3,
**dadurch gekennzeichnet,**
daß der geforderte Gütevergleichswert im Verlauf der Vergleiche der Zuordnungsmatrizen herabgesetzt wird.

5. Verfahren nach einem der Ansprüche 1 bis 3,
**dadurch gekennzeichnet,**
daß der Gütevergleichswert auf Null gesetzt wird.

## Claims

1. Method for automatic combinatorial optimisation of associations of individual precalculated positions of objects from a first quantity to individual, actually observed positions of objects of a second quantity in the tracking of several moving objects, wherein
- each object position of the quantity with the smaller number of object positions is associated with exactly one object position of the other quantity and each object position of the quantity with the greater number of object positions is associated with at most one object position of the other quantity,
- each individual pairing gives a preset distance magnitude which can be represented in a distance matrix and which corresponds with the square of the spacing of the actually observed position of an object and a precalculated position, and
- the paired associations are entered in an association matrix which is formed from the magnitudes 1 and 0 and in which as boundary conditions, of the magnitude 1 altogether only the number of object positions of the smaller quantity occur and in each column and line the magnitude 1 stands each time at most only once,
characterised in that
- as start constellation an arbitrary matrix fulfilling the boundary conditions is generated as initially valid start association matrix,
- two lines from the start association matrix are selected and in these lines the magnitudes 1 are inserted each time in those columns which in the other line were previously occupied by a 1,
- the sum is formed of those two distance magnitudes which in the distance matrix stand in the selected lines at the respective places, which are determined by the magnitude 1, of the start association matrix
- equally the sum is formed of those two distance magnitudes which in the distance matrix correspond in the selected lines to the respective places, which are determined by the magnitude 1, in the newly formed association matrix,
- the difference of the two formed sums of the distance magnitudes is formed as a quality difference and compared with a preset quality comparison value (threshold value),
- the newly formed association matrix is used as henceforth valid association matrix insofar as the quality difference falls below the quality comparison value, but otherwise the start association matrix remains valid,
- then in the now valid association matrix the magnitudes 1 are again exchanged in two lines by columns and again for each association matrix to be compared the two sums are formed of the distance magnitudes which in the selected lines of the respective association matrix are occupied by the magnitude 1,
- the quality difference between the two sums is thereupon in turn compared with the quality comparison value and the association matrix newly formed by the exchange in two-line manner of the magnitude 1 is then used as henceforth valid association matrix for further comparisons of association matrices insofar as the quality difference falls below the quality comparison value, but otherwise the previously valid association matrix serves as start constellation for further quality comparisons,
- and the method is continued in this manner until a predetermined time has elapsed or all exchange possibilities of two lines in the association matrix are exhausted or after a specific number of comparisons no better association matrix is found.

2. Method according to claim 1, characterised in that the start association matrix is predetermined by an optimisation process.

3. Method according to claim 2, characterised in that the simplified next-adjacent method is used as optimisation process.

4. Method according to one of claims 1 to 3, characterised in that the required quality comparison value is reduced in the course of the comparisons of the association matrices.

5. Method according to one of claims 1 to 3, characterised in that the valid comparison value is set to zero.

## Revendications

1. Procédé d'optimisation combinatoire automatique d'associations de positions individuelles préalablement calculées d'objets, faisant partie d'une première quantité de positions individuelles, effectivement observées d'objets faisant partie d'une seconde quantité lors de la poursuite de plusieurs objets mobiles, selon lequel
- à chaque position d'objet parmi la quantité de positions d'objets en un nombre réduit est associée de façon précise une position d'objet de l'autre quantité, et à chaque position d'objet faisant partie de la quantité de positions d'objets présentes en un nombre plus élevé, est associée au maximum une position d'objet de l'autre quantité,
- chaque appariement individuel fournit une valeur de distance prédéterminée, qui peut être représentée dans une matrice de distances et qui correspond au carré de la distance entre la position effectivement observée d'un objet et une position calculée au préalable, et
- les associations par couples sont recensées dans une matrice d'association, qui est formée par les valeurs 1 et O et dans laquelle en tant que conditions marginales globalement de la valeur 1, seul le nombre des positions d'objets de la quantité la plus faible apparaît et, dans chaque ligne et chaque colonne, la valeur 1 est présente respectivement seulement une fois au maximum,
caractérisé en ce
- que comme ensemble de départ, une matrice quelconque, qui satisfait aux conditions marginales, est générée en tant que matrice d'association de départ, qui est tout d'abord valable,
- que deux lignes de la matrice d'association de départ sont sélectionnées et que dans ces lignes, les valeurs 1 sont positionnées dans les colonnes respectives qui étaient occupées auparavant par un 1 dans l'autre ligne, que la somme des deux valeurs de distance, qui sont présentes dans la matrice de distances dans les lignes sélectionnées au niveau des emplacements respectifs, déterminés par la valeur 1, de la matrice d'association de départ, est formée,
- que la somme des valeurs de distances, qui sont situées dans la matrice de distances dans les lignes sélectionnées correspondent aux emplacements respectifs, déterminés par la valeur 1, dans la matrice d'association nouvellement formée, est également formée,
- que la différence des deux sommes formées des valeurs de distances est formée en tant que différence de qualité et est comparée à une valeur de référence de qualité (valeur de seuil) prédéterminée,
- que la matrice d'association nouvellement formée est utilisée en tant que matrice d'association qui est maintenant valable dans la mesure où la différence de qualité tombe au-dessous de la valeur de référence de qualité, mais que sinon, la matrice d'association de départ reste valable,
- qu'ensuite dans la matrice d'association maintenant valable, les valeurs 1 dans les deux lignes sont à nouveau permutées entre les colonnes et qu'à nouveau pour chaque matrice d'association respective à comparer, les deux sommes des valeurs de distance, qui sont occupées par la valeur 1 dans les lignes sélectionnées de la matrice respective d'association, sont formées,
- qu'ensuite la différence de qualité entre les deux sommes est à nouveau comparée à la valeur de référence de qualité et que la matrice d'association nouvellement formée par la permutation de la valeur 1 entre deux lignes est alors utilisée en tant que matrice d'association maintenant valable, pour d'autres comparaisons de matrices d'association, dans la mesure où la différence de qualité tombe au-dessous de la valeur de référence de qualité, ou sinon la matrice d'association valable jusqu'alors est utilisée en tant qu'ensemble de départ pour d'autres comparaisons de qualité, et
- que le procédé se poursuit de cette manière jusqu'à ce qu'un intervalle de temps prédéterminé soit écoulé ou que toutes les possibilités de permutation de deux lignes dans la matrice d'association soient épuisées ou qu'aucune meilleure matrice d'association ne soit trouvée au bout d'un nombre déterminé de comparaisons.

2. Procédé selon la revendication 1, caractérisé en ce que la matrice d'association de départ est prédéterminée par un procédé d'optimisation.

3. Procédé selon la revendication 2, caractérisé en ce qu'on utilise comme procédé d'optimisation le procédé de voisinage le plus proche simplifié.

4. Procédé selon l'une des revendications 1 à 3, caractérisé en ce que la valeur de référence de qualité requise est réduite au cours des comparaisons des matrices d'association.

5. Procédé selon l'une des revendications 1 à 3, caractérisé en ce que la valeur de référence de qualité est réglée à zéro.
